# EUROPÄISCHE PATENTSCHRIFT

(11) **EP 3 279 034 B1**
(45) Veröffentlichungstag und Bekanntmachung des Hinweises auf die Patenterteilung: **02.01.2019**
(21) Anmeldenummer: 17183480.7
(22) Anmeldetag: 27.07.2017
(51) Int. Cl.: B60P 7/08

(54) **SCHIENENANORDNUNG MIT RUNDKÖRPERN**
RAIL ASSEMBLY WITH ROUND OBJECTS
SYSTÈME DE RAIL DOTÉ DES CORPS RONDS

(30) Priorität: 02.08.2016 DE 202016104244 U; 25.11.2016 DE 202016106594 U
(43) Veröffentlichungstag der Anmeldung: 07.02.2018
(73) Patentinhaber: Lösing, Bernhard, 48683 Ahaus-Alstätte (DE)
(72) Erfinder: Lösing, Bernhard, 48683 Ahaus-Alstätte (DE)
(74) Vertreter: Habbel, Ludwig

(56) Entgegenhaltungen:
- DE-U- 1 890 983
- GB-A- 606 871
- GB-A- 2 268 127
- GB-A- 2 275 296
- JP-A- 2000 335 311
- US-A- 3 353 780

## Beschreibung

Die Erfindung betrifft eine Schienenanordnung nach dem Oberbegriff des Anspruchs 1.

Aus der GB 2 268 127 A ist ein Schienensystem bekannt, welches zur Ladungssicherung in Fahrzeugen eingesetzt vorgesehen ist. Ein Halter kann entlang der Schiene innerhalb des Hohlraums zu einer gewünschten Position verschoben werden. Mittels einer zusätzlich vorgesehen Schlitzleiste, in deren Schlitze ein beweglicher Riegel des Halters eingreifen kann, kann der Halter in vorgegebenen Abständen in der Schiene festgesetzt werden. Von den Haltern aus erstrecken sich Spanngurte als Zwischenelemente zu einer zweiten, gegenüberliegenden Schiene, die entlang ihrer Länge eine Vielzahl von Bohrungen aufweist. Die Spanngurte sind an ihrem Ende mit Haken versehen, welche in diese Bohrungen eingreifen können. Im Ergebnis ermöglicht die in diesem Dokument beschriebene Schienenanordnung, die Zwischenelemente in bestimmten, vorgegebenen Abständen entlang der beiden Schienen festzulegen.

Aus der JP 2000 335311 A ist eine Schienenanordnung zur Ladungssicherung in Fahrzeugen bekannt, wobei ein Halter zwei kugelförmige Halteabschnitte aufweist.

Aus der US 3 353 780 A ist eine Schienenanordnung zur Ladungssicherung in Fahrzeugen bekannt, welche längliche Halter aufweist.

Der Erfindung liegt die Aufgabe zugrunde, eine gattungsgemäße Schienenanordnung dahingehend zu verbessern, dass diese einerseits eine leichte Verstellbarkeit des Halters entlang der Schiene ermöglicht, mit einem geringem Schiebewiderstand, und andererseits eine sichere Festlegung des Halters an einer gewünschten Position an der Schiene, und dies bei einer möglichst unkomplizierten Handhabung des Halters.

Diese Aufgabe wird durch eine Schienenanordnung nach dem Anspruch 1 gelöst. Vorteilhafte Ausgestaltungen sind in den Unteransprüchen beschrieben.

Die Erfindung schlägt mit anderen Worten vor, beide gegenüberliegende Schienen gleichartig auszugestalten und dabei einerseits den Hohlraum in der Schiene mit einem gebogenen Querschnitt auszugestalten, und andererseits den Halteabschnitt des Halters mit einem dazu komplementären, ebenfalls gebogenen Querschnitt auszugestalten. Für das Zusammenspiel zwischen der Schiene und dem Halteabschnitt des Halters kommt es dabei lediglich auf den Bereich des Hohlraums der Schiene an, der beiderseits an die Nut angrenzt, und auf den Bereich des Halteabschnitts, der den Hals des Halters umgibt, denn in diesen beiden genannten Bereichen findet der Kontakt zwischen dem Halter und der Schiene statt. In vielen Anwendungsfällen kann vorgesehen sein, dass in einer Schiene mehrere Halter angeordnet sind.

Durch die vorschlagsgemäße Geometrie ergibt sich beiderseits des Halses eine geringe Kontaktfläche zwischen dem Halteabschnitt des Halters und der Schiene. Hierdurch wird ein Reibungswiderstand zwischen Halter und Schiene sehr gering gehalten, so dass eine leichtgängige Verschiebung des Halters innerhalb der Schiene ermöglicht wird. Treten jedoch Zugkräfte auf, die auf den Halter einwirken und den Halteabschnitt von innen an die Schiene pressen, so ergeben sich aufgrund der geringen Kontaktflächen hohe Flächenpressungen, die einen sicheren Halt des Halters an der Schiene bewirken und dementsprechend den Halter ortsfest an der Schiene festlegen, ohne dass hierzu zusätzliche Fixierungsmittel wie z.B. eine Verschraubung, ein Formschluss mit zusätzlichen Elementen wie einer Schlitzleiste, oder dergleichen erforderlich wären.

Aufgrund der leichtgängigen Verschiebbarkeit des Halters in der Schiene, und aufgrund der sicheren Festlegung des Halters an der Schiene "auf Zug", ohne die Erfordernis, zusätzliche Feststellmittel wie Klemmschrauben oder dergleichen benutzen zu müssen, ist die Handhabung der vorschlagsgemäßen Schienenanordnung für den Anwender besonders einfach. Auch ist die konstruktive Ausgestaltung der verwendeten Schienensysteme besonders einfach, da auf komplex ausgestaltete Halter, mit beweglichen Elementen zum Feststellen der Halter, verzichtet werden kann.

Bei einer Anwendung, bei welcher das Zwischenelement zwischen den beiden Schienen als Spanngurt ausgestaltet ist, kann der typischerweise am Spanngurt ohnehin vorgesehene Beschlag dazu genutzt werden, den Spanngurt an der gewünschten Stelle des Schienensystems festzulegen. Hierzu wird der Spanngurt gespannt und somit werden die Halter in den beiden gegenüberliegenden Schienen mit dem erforderlichen Druck an die Schienen angelegt, um aufgrund der vergleichsweise hohen Flächenpressen eine ortsfeste Festlegung der Halter und damit des Spanngurtes zu bewirken. Dabei kann die Stelle, an welcher der Halter festgesetzt werden soll, stufenlos gewählt werden, so dass eine optimale Position des Halters - beispielsweise des erwähnten Spanngurtes - gewählt werden kann.

Bei einer Anwendung, bei welcher das Zwischenelement nicht an einer bestimmten Stelle zwischen den Schienen verspannt und festgesetzt werden soll, sondern lediglich bei seinen Bewegungen geführt werden soll, gewährleistet die gleichartige Ausgestaltung der beiden gegenüberliegenden Schienen und Halter eine leichtgängige Verstellbarkeit dieses Zwischenelements. Die vorschlagsgemäße Schienenanordnung kann daher beispielsweise zur Führung beweglicher Elemente genutzt werden, beispielsweise zur Führung des Fahrkorbes eines Aufzugs, beispielsweise bei einem Lastenaufzug.

Vorteilhaft kann der Halteabschnitt in dem Kontaktbereich, also im Bereich der Kontaktfläche zwischen der Schiene und dem Halteabschnitt des Halters, an dessen Hals angrenzend, halbrund gebogen verlaufen, so dass auch in unterschiedlichen Schrägstellungen des Halters stets sichergestellt ist, dass die jeweilige Kontaktfläche zwischen Halter und Schiene gleich groß ist. Somit sind sowohl für die erzielbaren Haltekräfte als auch für die Verstellbarkeit des Halters entlang der Schiene stets gleich große Kräfte und somit stets gleich bleibende Eigenschaften des Schienensystems sichergestellt.

Der Halteabschnitt des Halters kann vorteilhaft nicht nur quer zur Längsrichtung der Schiene, sondern in mehreren Ebenen bogenförmig gekrümmt sein, und in einer als besonders vorteilhaft erachteten Ausführungsform als Kugelausschnitt ausgestaltet sein. Auf diese Weise ergibt sich beiderseits des Halses ein besonders geringer - und im Fall des Kugelausschnitts, beispielsweise einer Halbkugel lediglich ein punktueller - Kontakt zwischen dem Halteabschnitt des Halters und der Schiene, so dass der Reibungswiderstand zwischen Halter und Schiene besonders gering gehalten werden kann.

Je nach dem für das Schienensystem verwendeten Material und den aufzunehmenden Haltekräften, die vom Halter in die Schiene eingeleitet werden müssen, kann eine vorteilhafte Ausgestaltung darin liegen, dass der Halteabschnitt des Halters in Längsrichtung der Schiene länglich ausgestaltet ist. Auf diese Weise wird eine vergrößerte Kontaktfläche geschaffen, beispielsweise linienartig auf beiden Seiten des Halters. Die ansonsten als Punktlasten auftretenden Kräfte können auf diese Weise - beispielsweise bei einem höheren Abspannbedarf - auf einen größeren Bereich der Schiene und des Halters verteilt werden.

Bei einem solch länglichen Halter kann eine vorteilhafte Ausgestaltung darin liegen, auch den Hals des Halters länglich auszugestalten, nämlich in Längsrichtung des Halteabschnitts. Auf diese Weise bietet der Hals seinerseits die Möglichkeit, Haltekräfte auf einen größeren Bereich des Halters zu verteilen, beispielsweise indem an den Hals mehrere Ösen, Gewinde oder dergleichen anschließen.

Bei einem länglichen Hals kann eine vorteilhafte Ausgestaltung darin liegen, eine längliche Öse dadurch zu schaffen, dass in Längsrichtung des Halters ein Schlitz im Hals des Halters vorgesehen ist. Auf diese Weise wird beispielsweise eine Gurtöse geschaffen, durch die ein Spanngurt oder ein ähnliches Sicherungselement verlaufen kann.

Vorteilhaft kann der Übergang vom Halteabschnitt des Halters zum Hals des Halters gerundet verlaufen, so dass eine gleichmäßige Verteilung der Kräfte ohne eine den Halter schwächende Kerbwirkung ermöglicht wird. Somit kann der Halter zerstörungsfrei hohe Zugkräfte aufnehmen, wobei für unterschiedliche Anwendungen die Geometrie der Schiene und auch des Halters unterschiedlich ausgestaltet werden kann.

Vorteilhaft kann auch der Übergang von der Nut der Schiene zu dem Hohlraum der Schiene gerundet verlaufen. Aufgrund der lediglich vorhandenen zwei Berührungspunkte zwischen Halter und Schiene werden auf diese Weise Beschädigungen des Halters vermieden, die ansonsten aufgrund der hohen Flächenpressungen am Halteabschnitt auftreten könnten, wenn der Übergang zwischen Nut und Hohlraum scharfkantig ausgestaltet wäre.

Zum Anschluss an diejenigen Elemente, die mittels des Halters gehalten werden sollen, kann beispielsweise der Hals des Halters frei enden. Der Halter kann somit an das zu sichernde bzw. zu haltende Element angeschweißt werden. Vorteilhaft kann der Halter an seinem freien Ende, also an dem von dem Halteabschnitt beabstandeten Ende, mit einem Gewinde versehen sein. Auf diese Weise kann der Halter mittels einer Verschraubung an dem zu haltenden Element festgelegt werden, so dass definierte mechanische Eigenschaften des Halters sichergestellt sind und beispielsweise keine Beeinflussung aufgrund des beim Schweißen auftretenden Wärmeeintrags zu befürchten ist.

Alternativ zu einem solchen Gewinde, welches den Anschluss des Halters an praktisch beliebige zu haltende Elemente ermöglicht, kann der Halter mit einer Öse versehen sein, die beispielsweise den Anschluss von Spanngurten ermöglicht. Die Spanngurte weisen an ihren beiden Enden typischerweise Haken auf, die jeweils in eine solche Öse eines Halters eingehakt werden können.

Der den Hals umgebende Bereich des Halteabschnitts ist Vorschlagsgemäß in der Form eines Kugelausschnitts ausgestaltet. Vorteilhaft kann der gesamte Halteabschnitt als Kugel ausgestaltet sein. Kugeln sind mit einer hohen Präzision, was ihre Abmessungen angeht, wirtschaftlich handelsüblich, so dass derartige Kugeln zur Schaffung eines Halters verwendet werden können und beispielsweise der jeweils erforderliche Hals an eine solche Kugel angeschweißt werden kann. Der Hals kann beispielsweise als Rundstahl ausgestaltet sein, so dass er ebenfalls aus sehr wirtschaftlich verfügbaren Halbzeugen hergestellt werden kann und insgesamt die Halter in einer großen Anzahl preisgünstig hergestellt werden können, ohne dass es spezieller Gießformen oder dergleichen bedarf.

Der C-förmige Profilquerschnitt der Schiene erlaubt es, einen oder mehrere Halter vom Stirnende her in den Hohlraum der Schiene einzuführen. Eine erleichterte Handhabung des gesamten Schienensystems kann vorteilhaft dadurch ermöglicht werden, dass die Nut an einer oder mehreren Stellen jeweils eine Erweiterung aufweist, die so groß bemessen ist, dass der Halteabschnitt eines Halters durch diese Erweiterung in den Hohlraum der Schiene eingeführt werden kann. Wenn anschließend der Halter in Längsrichtung der Schiene verschoben wird, wo die Nut ihre nicht erweiterte, übliche Breite aufweist, kann dort der Halter problemlos an der Schiene festgelegt werden.

Die Montage der Schiene kann vorteilhaft mittels einer Verschraubung erfolgen. Zu diesem Zweck kann die Schiene vorteilhaft ein Gewinde aufweisen, welches die Befestigung der Schiene an einem angrenzenden Bauteil ermöglicht. Beispielsweise kann die Schiene mit einer Gewindebohrung versehen sein, in welche von außen eine Schraube eingeführt werden kann. Oder die Schiene kann mit nach außenragenden Gewindestiften versehen sein, so dass diese beispielsweise durch Bohrungen eines angrenzenden Stahlprofils geführt und mittels einer Mutter gesichert werden können, um auf diese Weise die Schiene an dem erwähnten Stahlprofil festzulegen.

Ein erster Anwendungsfall für das vorschlagsgemäße Schienensystem kann die Ladungssicherung im Laderaum eines Fahrzeugs betreffen. Das Fahrzeug kann als LKW, PKW oder als Anhänger eines LKWs bzw. PKWs ausgestaltet sein, es kann sich jedoch auch um ein Schienenfahrzeug oder ein Schiff handeln. Und der Laderaum kann entweder an dem Fahrzeug fest montiert sein, oder er kann ggf. von dem Fahrzeug abnehmbar sein und beispielsweise in Form eines Containers ausgestaltet sein. Um beispielsweise Zurrgurte im Laderaum verspannen zu können, können die vorschlagsgemäßen Schienen am bzw. im Boden des jeweiligen Laderaums, aber auch an bzw. in den Wänden oder an bzw. in der Decke des Laderaums angeordnet sein. Im Falle der Verwendung von Zurrgurten können die Halter mit den bereits erwähnten Ösen ausgestattet sein. Es können jedoch auch Balken - beispielsweise metallische Vierkant-Hohlprofile - für die Ladungssicherung verwendet werden, so dass in diesem Fall die Halter an einen solchen Balken angeschraubt oder angeschweißt sein können.

Ein zweiter Anwendungsfall für das vorschlagsgemäße Schienensystem kann in der Führung eines verfahrbaren Elements liegen. Aufgrund der geringen Kontaktflächen zwischen Halter und Schiene ist ein leichtgängiger Lauf des Fahrelements gewährleistet. Im einfachsten Fall kann ein einziger Halter dazu dienen, das Fahrelement entlang der Schiene zu führen. Vorteilhaft jedoch können zwei Halter an dem Fahrelement befestigt sein und in derselben Schiene laufen, so dass das Fahrelement verdrehsicher geführt ist. Eine noch präzisere Führung des Fahrelements kann vorteilhaft dadurch erfolgen, dass zwei parallel verlaufende Schienen vorgesehen sind und das Fahrelement in jeder dieser beiden Schienen mit jeweils zwei Haltern geführt ist. Wenn beispielsweise das Fahrelement vertikal verfahren werden soll, wie im Falle eines Lifts, können vorteilhaft auf zwei gegenüberliegenden Seiten des Fahrelements jeweils zwei aufrecht verlaufende Schienen angeordnet sein und das Fahrelement mit dementsprechend vier Haltern in den vier Schienen präzise geführt werden.

Das Material des Halters und der Schiene kann danach ausgewählt werden, für welchen Anwendungsfall das Schienensystem verwendet werden soll und welche Zugkräfte dabei aufgenommen werden sollen. Wenn das Schienensystem beispielsweise zur Ladungssicherung verwendet werden soll und dabei Spannsysteme wie z.B. Spanngurte an das Schienensystem anschließen, können die Elemente des Schienensystems vorteilhaft aus Metall bestehen.

Wenn das Schienensystem jedoch in erster Linie zur Führung von Bauteilen genutzt werden soll und dabei ein möglichst leiser, klapperfreier Lauf ermöglicht werden soll, kann beispielsweise die Schiene, und ggf. auch der Halter, aus Kunststoff bestehen - wobei für die Schiene beispielsweise ein Kunststoff mit guten Gleiteigenschaften verwendet werden kann, beispielsweise ein sogenannter selbstschmierender Kunststoff.

Die Verwendung getemperten Kunststoffs kann einerseits aufgrund der verbesserten mechanischen Stabilität des Kunststoffs höhere zulässige Haltekräfte des Kunststoff-Schienensystems ermöglichen, und gleichzeitig ermöglicht sie auch einen vergleichsweise leisen Lauf der Halter in der Schiene sowie eine korrosionsgeschützte und wirtschaftlich vorteilhafte Ausgestaltung des Schienensystems bei einer mechanischen Belastbarkeit, die unterhalb derjenigen eines metallischen Schienensystems liegt.

Wenn die Schiene aus Kunststoff besteht, kann sie vorteilhaft in ein metallisches Außenprofil eingefasst sein, beispielsweise in eine metallische Profilschiene mit einem im Wesentlichen C-förmigen Querschnitt. Das metallische Außenprofil bewirkt einerseits eine mechanische Stabilisierung der Kunststoff-Schiene, und weiterhin ermöglicht es beispielsweise die Befestigung der Schiene mittels einer Schweißverbindung an einer metallischen Tragkonstruktion.

Ausführungsbeispiele der Erfindung werden nachfolgend anhand der rein schematischen Darstellungen näher erläutert. Dabei zeigt
- Fig. 1: einen Querschnitt durch ein erstes Ausführungsbeispiel einer Schienenanordnung und eine Ansicht auf ein erstes Ausführungsbeispiel eines darin geführten Halters,
- Fig. 2: eine perspektivische Ansicht auf die Schiene von Fig. 1 und einen darin angeordneten, teilweise weggebrochenen Halter,
- Fig. 3: eine Ansicht ähnlich Fig. 1, wobei der Halter teilweise weggebrochen ist, und wobei die Schiene zur Ladungssicherung im Ladeboden eines LKWs dient,
- Fig. 4: einen Horizontalschnitt durch einen schematisch vereinfacht dargestellten Lift,
- Fig. 5: einen Querschnitt durch ein zweites Ausführungsbeispiel einer Schiene,
- Fig. 6: eine Ansicht ähnlich Fig. 1, als Querschnitt durch die Schiene von Fig. 5 und ein weiteres Ausführungsbeispiel eines Halters, und
- Fig. 7: eine perspektivische Ansicht auf das Ausführungsbeispiel 1 von Fig. 6.

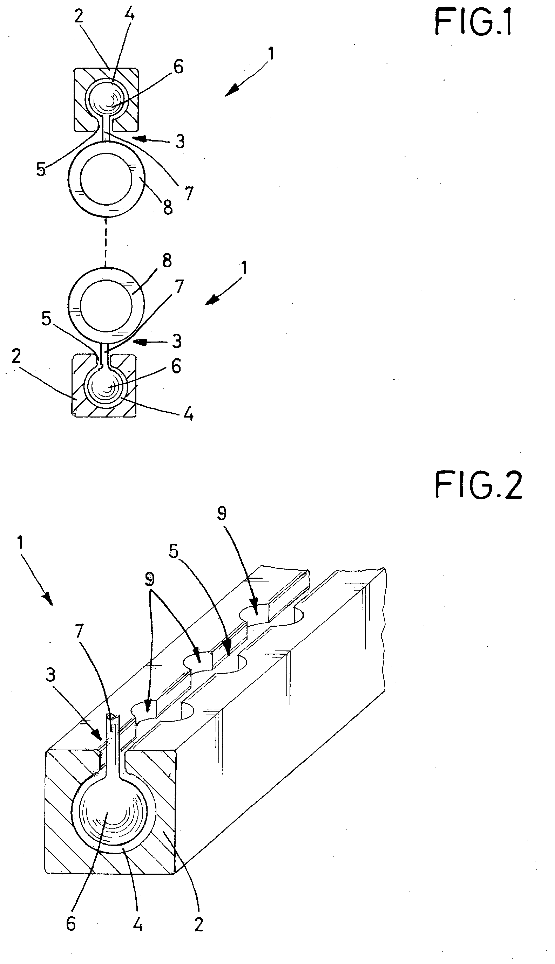

In Fig. 1 ist mit 1 insgesamt ein Schienensystem bezeichnet, welches aus den beiden grundsätzlichen Komponenten einer Schiene 2 und eines Halters 3 besteht. Die Schiene 2 weist einen über ihre gesamte Länge verlaufenden Hohlraum 4 auf, an den eine Nut 5 anschließt.

Im Hohlraum 4 ist ein als Kugel ausgestalteter Halteabschnitt 6 des Halters 3 längs verschiebbar angeordnet. An den Halteabschnitt 6 schließt ein Hals 7 des Halters 3 an, wobei sich dieser Hals 7 durch die Nut 5 aus der Schiene 2 heraus erstreckt. An seinem Ende, welches dem Halteabschnitt 6 gegenüber liegt, trägt der Hals 7 eine Öse 8.

Die Öse 8 ermöglicht beispielsweise den Anschluss von Sicherungselementen wie z.B. eines Seils, welches durch die Öse 8 hindurch geführt werden kann, oder z.B. eines Hakens, welcher in die Öse 8 eingehakt werden kann.

In diesem Beispiel verläuft der Hohlraum 4 konzentrisch um den als Kugel ausgestalteten Halteabschnitt 6, also kreisrund. Möglichst geringe Kontaktflächen zwischen Halteabschnitt 6 und Schiene 2 können allerdings vorteilhaft durch die dargestellte Ausführung sichergestellt werden. Abweichend von dem dargestellten Ausführungsbeispiel, bei dem der Hohlraum 4 mit gleichmäßigem Radius konzentrisch um den als Kugel ausgestalteten Halteabschnitt 6 verläuft, kann die Schiene 2 an die Nut 5 angrenzend einen Hohlraum aufweisen, dessen Radius dort größer ist als in seinem übrigen Querschnittsverlauf.

Zwei gleichartige Schienensysteme 1 sind zusammenwirkend vorgesehen, indem zwei Schienen 2 mit ihren Haltern 3 einander gegenüberliegend angeordnet sind. Die beiden Schienensysteme 1 bilden zusammen mit einem gestrichelt angedeuteten Zwischenelement eine vorschlagsgemäße Schienenanordnung. Das Zwischenelement kann beispielsweise als Spanngurt ausgestaltet sein, der mit seinen beiden gegenüberliegenden Enden an den beiden Ösen 8 der beiden Halter 3 befestigt ist.

Fig. 2 zeigt die Schiene 2 in einer perspektivischen Ansicht. Dabei ist ersichtlich, dass die Nut 5 in regelmäßigen Abständen Erweiterungen 9 aufweist. Aufgrund der rein schematischen Darstellung und der dementsprechend nicht exakt passenden Größenverhältnisse muss erläutert werden, dass diese Erweiterungen 9 so groß ausgestaltet sind, dass sie das Einführen oder die Entnahme eines Halteabschnitt 6 in den Hohlraum 4 bzw. aus dem Hohlraum 4 ermöglichen. Auch sind die Abstände der einzelnen Erweiterungen 9 zueinander rein beispielhaft und nicht maßstabsgerecht dargestellt, tatsächlich können die Erweiterungen 9 erheblich größere Abstände zueinander aufweisen, so dass zwischen zwei benachbarten Erweiterungen 9 ein dementsprechend großer Abschnitt der Schiene 2 bereitgestellt wird, in welchem eine Festlegung des Halters 3 an der Schiene 2 möglich ist.

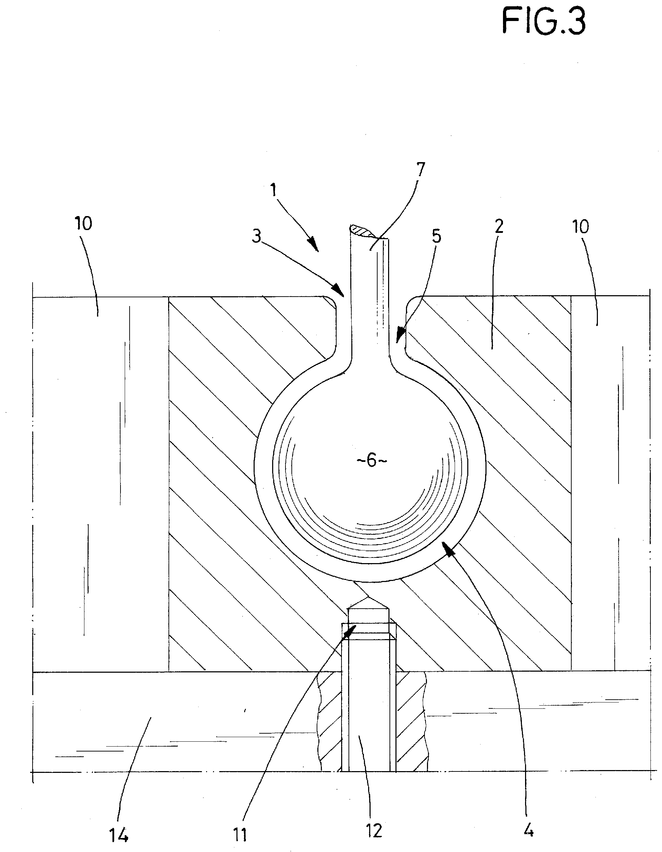

Fig. 3 zeigt in einem gegenüber den Figuren 1 und 2 größeren Maßstab ein Schienensystem 1, welches zur Ladungssicherung im Laderaum eines Fahrzeugs dient. Dabei ist vorgesehen, dass die Schiene 2 in einem Ladeboden 10 eines LKWs befestigt ist. Hierzu weist die Schiene 2 unterhalb des Hohlraums 4 ein als Innengewinde ausgestaltetes Gewinde 11 auf, in welches sich eine Schraube 12 erstreckt. Die Schraube 12 verläuft durch einen Träger 14, auf dem der Ladeboden 10 aufliegt, und der auch die Schiene 2 trägt. Der Hals 7 des Halters 3 ist oben abgebrochen dargestellt, hier kann beispielsweise eine Öse 8 an den Hals 7 anschließen.

Aus Fig. 3 ist ersichtlich, dass der Durchmesser des Halteabschnitts 6 kleiner ist als der Durchmesser des kreisförmigen Querschnitts des Hohlraums 4. Dementsprechend leicht und mit einem geringen Widerstand kann der Halter 3 in der Schiene 2 längs verschoben werden. Wird jedoch beispielsweise ein Spanngurt über die auf dem Ladeboden 10 liegende Ladung verlegt, in die Öse 8 des Halters 3 eingehakt und anschließend gespannt, so ergeben sich nach oben wirkende Zugkräfte, die den Halteabschnitt 6 beiderseits der Nut 5 von innen an die Schiene 2 anlegen. Aufgrund der lediglich punktuellen Berührung ergeben sich hohe Flächenpressungen, die den Halter 3 sicher an dieser Stelle an der Schiene 2 festlegen, ohne dass es zusätzlicher Feststellmittel oder Spannmittel - beispielsweise in Form von Klemmschrauben oder dergleichen - bedarf.

Aus Fig. 3 ist auch ersichtlich, dass am Halter 3 der Übergang vom Hals 7 zum angrenzenden Halteabschnitt 6 und an der Schiene 2 auch der Übergang von der Nut 5 zum Hohlraum 4 jeweils gerundet verläuft.

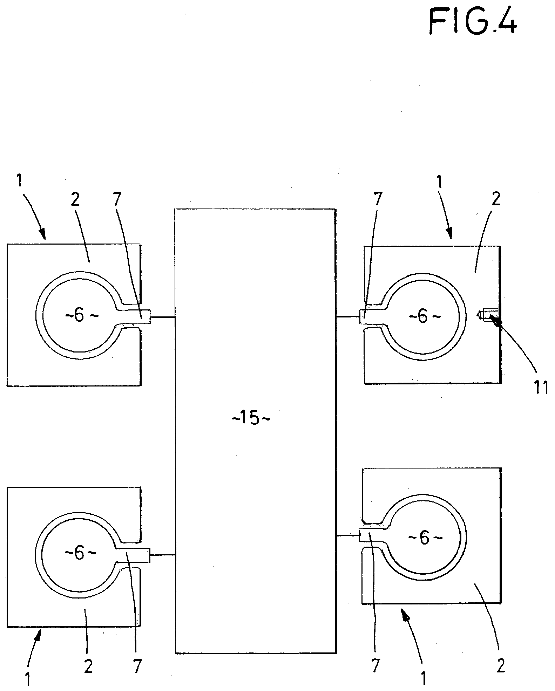

Fig. 4 zeigt in einer sehr vereinfachten, schematischen, und nicht maßstabsgetreuen Darstellung eine Ansicht von oben auf einen Fahrkorb eines Lifts, wobei dieser Fahrkorb als Fahrelement 15 bezeichnet ist. Dieses Fahrelement 15 kann vertikal verfahren werden, also senkrecht zur Zeichenebene, und wird dabei durch vier Schienensysteme 1 geführt, wobei vorschlagsgemäß jeweils zwei Schienen 2 einander gegenüberliegend angeordnet sind und somit bei diesem Ausführungsbeispiel zwei vorschlagsgemäße Schienenanordnungen zur Anwendung kommen. Das Fahrelement 15 bildet bei diesem Ausführungsbeispiel das Zwischenelement, welches bei jeder der beiden Schienenanordnungen jeweils die Halter 3 der sich gegenüberliegenden Schienensysteme 1 miteinander verbindet. Die Hälse 7 der vier Halter 3 schließen dabei jeweils an das Fahrelement 15 an, indem sie mit dem Fahrelement 15 beispielsweise verschraubt sind. Aufgrund der rein schematischen Darstellung ist die Verschraubungsstelle nicht detailliert in Fig. 4 erkennbar.

Was die Befestigung der Schienen 2 angeht, ist auch in Fig. 4 rein beispielhaft für die oben rechts dargestellte Schiene 2 eine Befestigungsmöglichkeit ähnlich wie in Fig. 3 angedeutet: die Schiene 2 ist in regelmäßigen Abständen jeweils mit einem als Innengewinde ausgestalteten Gewinde 11 versehen, so dass die Schiene 2 beispielsweise an einen vertikalen Stahlträger eines Gebäudes angeschraubt werden kann.

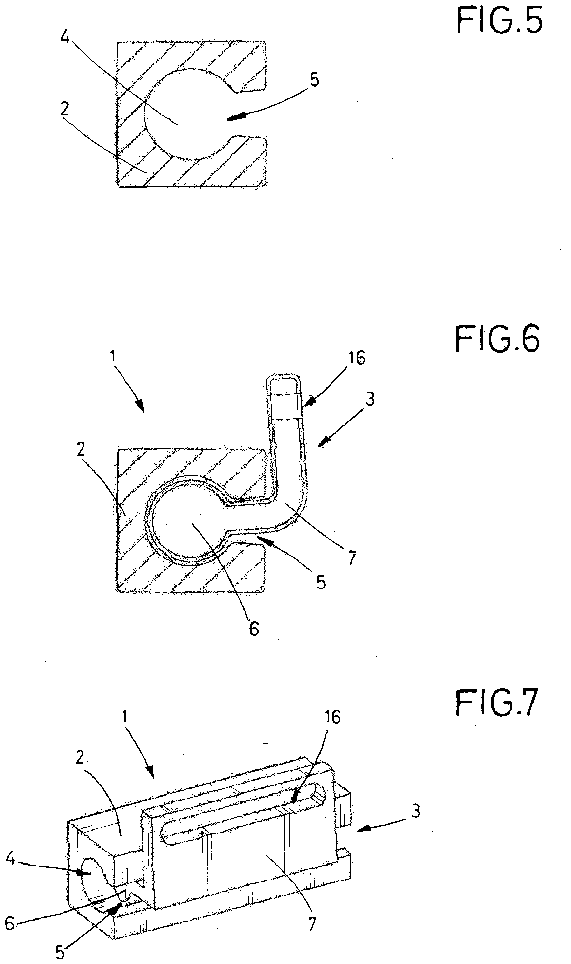

In Fig. 5 ist ein Ausführungsbeispiel einer Schiene 2 dargestellt, welches bei quadratischen Außenabmessungen mit einer Kantenlänge von 35 mm einen Hohlraum 4 mit einem Durchmesser von 22 mm aufweist sowie eine Nut 5, deren gegenüberliegende Flanken einen Öffnungswinkel von 10° zueinander aufweisen und somit eine gewisse Schwenkbeweglichkeit eines in der Schiene 2 gehaltenen Halters 3 quer zur Schiene 2 ermöglicht.

In Fig. 6 ist eine Schienenanordnung 1 unter Verwendung der Schiene 2 von Fig. 5 sowie eines darin angeordneten Halters 3 dargestellt. Der Halter 3 weist einen Halteabschnitt 6 auf, der im Querschnitt zwar grundsätzlich kreisrund ausgestaltet ist, jedoch insgesamt nicht kugelförmig, sondern länglich, wobei sich der Halteabschnitt 6 in Längsrichtung der Schiene 2 bzw. des Hohlraums 4 erstreckt. An den Halteabschnitt 6 schließt ein Hals 7 an, der im rechten Winkel gebogen verläuft, so dass bei der dargestellten Ausrichtung des Schienensystems 1 ein erster Abschnitt des Halses 7 liegend verläuft, und ein daran anschließender Abschnitt des Halses 7 aufrecht verläuft. Aufgrund des Öffnungswinkels der Nut 5 von 10° ist in Fig. 6 der Halter 3 in einer Stellung gezeigt, in welcher er aus einer Mittellage heraus nach oben geschwenkt ist, so dass der erwähnte liegende Abschnitt des Halses 7 dem oberen Ufer der Nut 5 anliegt. Dementsprechend ist der aufrechte Abschnitt des Halses 7 nicht exakt vertikal ausgerichtet, sondern geringfügig nach links gekippt.

Fig. 7 zeigt das Schienensystem 1 von Fig. 6 in einer perspektivischen Ansicht. Dabei ist ersichtlich, dass der Hals 7 sich ebenso wie der Halteabschnitt 6 über die gesamte Länge des Halters 3 erstreckt. Der Halter 3 kann daher ebenso wie die Schiene 2 als Abschnitt eines Strangpressprofils hergestellt werden. Auch der längliche Halter 3 des Ausführungsbeispiels der Fig. 6 und 7 weist eine Öse auf, ähnlich wie die Öse 8 des Ausführungsbeispiels der Fig. 1. Jedoch ist die Öse bei dem Ausführungsbeispiel der Fig. 6 und 7 als längliche Gurtöse ausgestaltet und durch einen Schlitz 16 geschaffen, der sich im zweiten, aufrecht verlaufenden Abschnitt des Halses 7 in Längsrichtung des Halters 3 erstreckt.

## Patentansprüche

1. Schienenanordnung, mit einem Schienensystem (1),
mit einer Schiene (2), die einen in Wesentlichen C-förmigen Querschnitt aufweist,
wobei in der Oberfläche der Schiene (2) eine Nut (5) verläuft,
welche eine Verbindung zu einem Hohlraum (4) schafft, der von dem Querschnittsprofil der Schiene (2) umschlossen ist und einen Querschnitt aufweist, der breiter ist als die Nut (5),
und mit wenigstens einem von der Schiene (2) aufnehmbaren Halter (3),
der einen in dem Hohlraum (4) anordbaren Halteabschnitt (6) aufweist
sowie einen Hals (7), der sich durch die Nut (5) hindurch aus der Schiene (2) heraus erstreckt, wobei der Halteabschnitt (6) des Halters (3) an den Hals (7) angrenzend quer zur Nut konvex gebogen verlaufend ausgestaltet ist,
und der Querschnitt des Hohlraums (4) der Schiene (2) beiderseits an die Nut (5) angrenzend konkav bogenförmig verläuft
**dadurch gekennzeichnet,**
**dass** zwei gleichartige Schienen (2) einander gegenüberliegend angeordnet sind,
die gegenüberliegenden Halter durch ein Zwischenelement miteinander verbunden sind,
und der mit einem gebogenen Querschnitt ausgestaltete Hohlraum (4) in der Schiene (2) konzentrisch um den Halteabschnitt (6) des Halters (3) mit einem dazu komplementären, ebenfalls gebogenen Querschnitt verläuft.

2. Schienenanordnung nach Anspruch 1,
**dadurch gekennzeichnet,**
**dass** der Halteabschnitt (6) des Halters (3) an den Hals (7) angrenzend quer zur Nut halbrund gebogen verläuft.

3. Schienenanordnung nach Anspruch 1 oder 2,
**dadurch gekennzeichnet,**
**dass** der Halteabschnitt (6) des Halters (3) an den Hals (7) angrenzend halbkugelförmig ausgestaltet ist.

4. Schienenanordnung nach Anspruch 1 oder 2,
**dadurch gekennzeichnet,**
**dass** der Halteabschnitt (6) des Halters (3) in Längsrichtung der Schiene (2) länglich ausgestaltet ist.

5. Schienenanordnung nach Anspruch 4,
**dadurch gekennzeichnet,**
**dass** der Hals (7) in Längsrichtung des Halters (3) länglich ausgestaltet ist.

6. Schienenanordnung nach Anspruch 5,
**dadurch gekennzeichnet,**
**dass** der Hals (7) einen Schlitz (16) aufweist, welcher sich in Längsrichtung des Halters (3) erstreckt.

7. Schienenanordnung nach einem der vorhergehenden Ansprüche,
**dadurch gekennzeichnet,**
**dass** der Übergang von dem Halteabschnitt (6) des Halters (3) zu dem Hals (7) gerundet verläuft.

8. Schienenanordnung nach Anspruch einem der vorhergehenden Ansprüche,
**dadurch gekennzeichnet,**
**dass** der Übergang von der Nut (5) der Schiene (2) zu dem Hohlraum (4) gerundet verläuft.

9. Schienenanordnung nach einem der vorhergehenden Ansprüche,
**dadurch gekennzeichnet,**
**dass** der Hals (7) an seinem von dem Halteabschnitt (6) beabstandeten Ende mit einem Gewinde versehen ist.

10. Schienenanordnung nach einem der Ansprüche 1 bis 8,
**dadurch gekennzeichnet,**
**dass** der Hals (7) an seinem von dem Halteabschnitt (6) beabstandeten Ende mit einer Öse (8) versehen ist.

11. Schienenanordnung nach einem der Ansprüche 1 bis 3 oder 7 bis 10,
**dadurch gekennzeichnet,**
**dass** der Halteabschnitt (6) des Halters (3) als Kugel ausgestaltet ist.

12. Schienenanordnung nach einem der vorhergehenden Ansprüche,
**dadurch gekennzeichnet,**
**dass** die Nut (5) eine Erweiterung (9) aufweist,
die das Einsetzen des Halteabschnitts (6) eines Halters (3) in den Hohlraum (4) ermöglichend bemessen ist.

13. Schienenanordnung nach einem der vorhergehenden Ansprüche,
**dadurch gekennzeichnet,**
**dass** eine Schiene (2) ein die Befestigung der Schiene (2) an einem angrenzenden Bauteil ermöglichendes Gewinde (11) aufweist.

14. Schienenanordnung nach einem der vorhergehenden Ansprüche,
**dadurch gekennzeichnet,**
**dass** die Schienen (2) im Laderaum eines Fahrzeugs angeordnet sind.

15. Schienenanordnung nach einem der Ansprüche 1 bis 12,
**dadurch gekennzeichnet,**
**dass** die Schienen (2) als Führungsschienen neben einem Fahrelement (15) angeordnet sind,
und **dass** am Fahrelement (15) wenigstens zwei Halter (3) angeordnet sind, deren Halteabschnitte (6) sich in den Hohlraum (4) der jeweiligen zugeordneten Schiene (2) erstrecken.

## Claims

1. Rail arrangement having a rail system (1) having a rail (2) that incorporates an essentially C-shaped cross-section,
wherein a groove (5) extends along the surface of the rail (2) which groove forms a connection to a hollow space (4) that is enclosed by the cross-sectional profile of the rail (2) and incorporates a cross-section that is wider than the groove (5) and has at least one retaining element (3) that can fit inside the rail (2) and that incorporates a retaining portion (6) that can be arranged in the hollow space (4)
and a narrow portion (7) that extends out through the groove (5) and out of the rail (2),
wherein the retaining portion (6) of the retaining element (3) is designed with a convex curve and is set at right angles to the groove and adjoins the narrow portion (7), and the cross-section of the hollow space (4) in the rail (2) is designed with a concave curve and adjoins the groove (5) on both sides,
**characterised in that** two identical rails (2) are arranged so as to oppose each other, that the opposing retaining elements are connected to each other by an intermediate element
and that the hollow space (4) designed with a curved cross-section extends in the rail (2) concentrically around the retaining portion (6) of the retaining element (3) and has a likewise curved cross-section to match the retaining portion (6).

2. Rail arrangement in accordance with claim 1, **characterised in that** the retaining portion (6) of the retaining element (3) extends in a semi-circular curve and at right angles to the groove and adjoins the narrow portion (7).

3. Rail arrangement in accordance with claim 1 or 2, **characterised in that** the retaining portion (6) of the retaining element (3) is designed to be hemispherical and adjoins the narrow portion (7).

4. Rail arrangement in accordance with claim 1 or 2, **characterised in that** the retaining portion (6) of the retaining element (3) is designed to extend longways along the rail (2).

5. Rail arrangement in accordance with claim 4, **characterised in that** the narrow portion (7) is designed to extend longways along the retaining element (3).

6. Rail arrangement in accordance with claim 5, **characterised in that** the narrow portion (7) incorporates a slot (16) that extends longways along the retaining element (3).

7. Rail arrangement in accordance with any one of the foregoing claims, **characterised in that** the transition from the retaining portion (6) of the retaining element (3) to the narrow portion (7) is designed to be round along its extent.

8. Rail arrangement in accordance with any one of the foregoing claims, **characterised in that** the transition from the groove (5) in the rail (2) to the hollow space (4) is designed to be round along its extent.

9. Rail arrangement in accordance with any one of the foregoing claims, **characterised in that** the narrow portion (7) is provided with a screw thread at its end set at a distance from the retaining portion (6).

10. Rail arrangement in accordance with any one of claims 1 to 8, **characterised in that** the narrow portion (7) is provided with a ring (8) at its end set at a distance from the retaining portion (6).

11. Rail arrangement in accordance with any one of claims 1 to 3 or 7 to 10, **characterised in that** the retaining portion (6) of the retaining element (3) is designed to be spherical.

12. Rail arrangement in accordance with any one of the foregoing claims, **characterised in that** the groove (5) incorporates a widened portion (9) that is dimensioned to enable the retaining portion (6) of a retaining element (3) to be inserted into the hollow space (4).

13. Rail arrangement in accordance with any one of the foregoing claims, **characterised in that** a rail (2) incorporates a screw thread (11) to enable the rail (2) to be fastened to an adjacent component part.

14. Rail arrangement in accordance with any one of the foregoing claims, **characterised in that** the rails (2) are arranged in the load-carrying space of a vehicle.

15. Rail arrangement in accordance with any one of claims 1 to 12, **characterised in that** the rails (2) are arranged as guide rails next to a drive element (15) and that arranged on the drive element (15) are at least two retaining elements (3) the retaining portions (6) of which extend into the hollow space (4) in each rail (2) assigned to them.

## Revendications

1. Agencement de rails comprenant un système (1) de rail avec un rail (2) présentant une section essentiellement en forme de C,
sachant qu'une gorge (5) continue a été ménagée dans la surface du rail (2), gorge qui crée une liaison avec une cavité (4), laquelle est délimitée par le profilé transversal du rail (2) et présente une section plus large que la gorge (5), et avec au moins un support (3) pouvant être logé dans le rail (2), support qui présente un segment de retenue (6) agençable dans la cavité (4),
ainsi qu'un col (7) qui s'étend vers l'extérieur depuis le rail (2) en traversant la gorge (5),
sachant que le segment de retenue (6) du support (3) limitrophe du col (7) est configuré avec un tracé convexe transversalement à la gorge, et que la section de la cavité (4) du rail (2) présente des deux côtés, à proximité immédiate de la gorge (5), un tracé concave,
**caractérisé en ce que** deux rails (2) du même type sont disposés l'un en face de l'autre et que les supports se faisant face sont reliés entre eux par un élément intermédiaire,
et que la cavité (4) configurée avec une section incurvée a été ménagée dans le rail (2) concentriquement autour du segment de retenue (6), présentant une section complémentaire également incurvée, du support (3).

2. Agencement de rail selon la revendication 1, **caractérisé en ce que** le segment de retenue (6) du support (3) présente, transversalement à la gorge et à proximité immédiate du col (7), un tracé incurvé mi-rond.

3. Agencement de rail selon la revendication 1 ou 2, **caractérisé en ce que** le segment de retenue (6) du support (3) à proximité immédiate du col (7) est configuré en forme d'hémisphère.

4. Agencement de rail selon la revendication 1 ou 2, **caractérisé en ce que** le segment de retenue (6) du support (3) est configuré oblong dans le sens longitudinal du rail (2).

5. Agencement de rail selon la revendication 4, **caractérisé en ce que** le col (7) est configuré oblong en direction longitudinale du support (3).

6. Agencement de rail selon la revendication 5, **caractérisé en ce que** le col (7) présente une fente (16) qui s'étend dans le sens longitudinal du support (3).

7. Agencement de rail selon l'une des revendications précédentes, **caractérisé en ce que** la transition entre le segment de retenue (6) du support (3) et le col (7) présente un tracé arrondi.

8. Agencement de rail selon l'une des revendications précédentes, **caractérisé en ce que** la transition entre la gorge (5) du rail (2) et la cavité (4) présente un tracé arrondi.

9. Agencement de rail selon l'une des revendications précédentes, **caractérisé en ce que** le col (7) est muni d'un filetage en son extrémité distante du segment de retenue (6).

10. Agencement de rail selon l'une des revendications 1 à 8, **caractérisé en ce que** le col (7) est muni d'un oeillet (8) en son extrémité distante du segment de retenue (6),

11. Agencement de rail selon l'une des revendications 1 à 3 ou 7 à 10, **caractérisé en ce que** le segment de retenue (6) du support (3) est configuré en bille.

12. Agencement de rail selon l'une des revendications précédentes, **caractérisé en ce que** la gorge (5) présente une extension (9) dimensionnée de façon à permettre la mise en place du segment de retenue (6) d'un support (3) dans la cavité (4).

13. Agencement de rail selon l'une des revendications précédentes, **caractérisé en ce qu'**un rail (2) présente un filetage (11) permettant de fixer le rail (2) contre un composant limitrophe.

14. Agencement de rail selon l'une des revendications précédentes, **caractérisé en ce que** les rails (2) sont disposés dans le compartiment de chargement d'un véhicule.

15. Agencement de rail selon l'une des revendications 1 à 12, **caractérisé en ce que** les rails (2) sont disposés comme rails de guidage à côté d'un élément mobile (15), et **en ce que** contre l'élément mobile (15) sont disposés au moins deux supports (3) dont les segments de retenue (6) s'étendent dans la cavité (4) du rail (2) qui leur est respectivement affecté.
